# EUROPEAN PATENT APPLICATION

(11) **EP 4 029 369 A1**
(43) Date of publication of application: **20.07.2022**
(21) Application number: 21178079.6
(22) Date of filing: 07.06.2021
(51) Int. Cl.: A01G 31/02, A01K 63/04, A01G 31/06, A01M 29/34

(54) **SPIDER BREEDING AND AQUAPONIC CULTIVATION DEVICE**

(30) Priority: 13.01.2021 IT 202100000452
(71) Applicant: Itamia Engineering S.r.l., 30015 Chioggia (VE) (IT)
(72) Inventor: UCCELLA, Arnaldo, 30010 Campolongo Maggiore (VE) (IT)
(74) Representative: Conversano, Gabriele

(57) **Abstract**

Combined device (1) for spiders breeding, flax plants farming, fish farming and algae farming, comprising: a tank (10) for fish farming (102) and algae farming (103), characterized in that it comprises further a growing bed optimized for flax plants farming and spiders breeding, comprising a panel (20) positioned on said tank (10) and provided with a plurality of holes (22), arranged at regular distance (d) between each other, each hole (20) being configured to house a flax plant (30), and in that said panel comprises a plurality of stems (21), each provided with a stalk (212) and a head (211) with greater section than the stalk (212), said stems (21) being arranged next to each other, and facing towards the upper portion of said panel (20).

## Description

### Field of the invention

The present invention relates to a combined device for spiders breeding and aquaponic farming.

The products obtained by means of such device (flax fibre, spiders' web silk, algae, cellulose, linseed oil, algae oil) are useful for the realization of a composite material.

So, in other words, the present invention relates to a combined device and respective method of usage for the combined production of raw materials needed for the realization of bio-composite materials. State of the art

The usage of flax fibres and spiders' webs for the realization of composite materials is known. It is also known the combined usage, for realizing a composite material, of natural fibres (for example flax fibres); animal fibres (such as spiders' webs); vegetal oil for the matrix (as for example algae oil), as it is described in WO2011/116363. Anyway, neither methods nor devices are known, suitably studied for spiders breeding and farming of plants needed to provide a bio-composite material comprising both vegetal origin natural fibres and animal origin natural fibres.

Some aquaponic devices are described, as a way of pure example, in documents CN106508186, WO03/011010, WO2018/070650, CN105918098.

In these ones, and in many other devices known at the state of the art, spiders are considered a problem, or it makes no difference.

An aquaponic device and respective method of usage are never specifically optimized for spiders breeding together with vegetal fibres and algae farming.

### Aim of the invention

Aim of the present invention is to provide an aquaponic device and a method of usage of such device specifically optimized for spiders breeding and contemporary vegetal fibres and algae farming. According to another aim, the device object of the present invention provides an aquaponic device and respective method of usage for combined production of raw materials needed for realization of a bio-composite material.

Yet, according to another aim, the present invention provides a composite material obtained by using the products obtained through farming and breeding by means of the described aquaponic device.

### Brief description

The invention realizes the prefixed aims since it is a combined device (1) for spiders breeding, flax plants farming, fish farming and algae farming comprising: a tank (10) for fish farming (102) and algae farming (103), characterized in that it comprises further a growing bed optimized for flax plants farming and spiders breeding, said growing bed comprising a panel (20) positioned on said tank (10) and provided with a plurality of holes (22), preferably arranged at regular distance (d) between each other, each hole (20) being configured to house a flax plant (30), and in that said panel comprises also a plurality of stems (21), each provided with a stalk (212) and a head (211) with greater section than the stalk (212), said stems (21) being arranged next to each other, and facing towards the upper portion of said panel (20).

### Description of the drawings

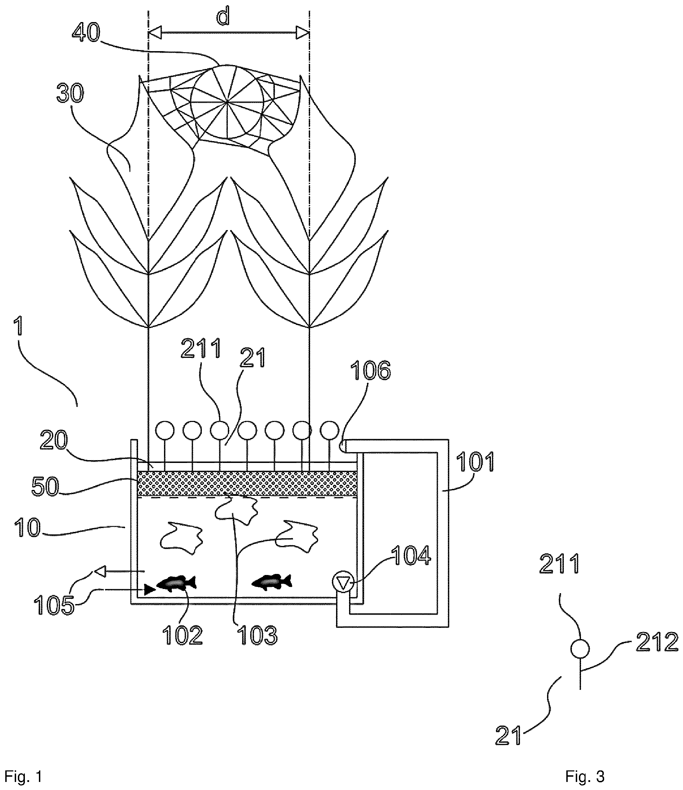

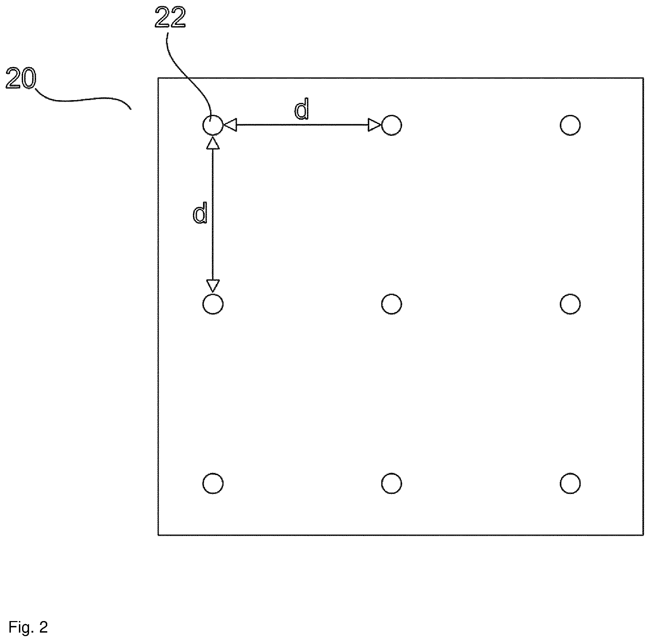

Figure 1 shows a schematic view of the device according to the invention; figure 2 shows a view of a preferred embodiment of a plate according to the invention; figure 3 shows a detailed view of a stem according to the invention.

### Description of the invention

As yet said, the present invention provides a particularly efficient way to produce the elements needed for the realization of a bio-composite material comprising a matrix derived from vegetal oils and a stiffening comprising both vegetal and animal origin fibres.

According to a preferred embodiment, the bio-composite material obtained with the raw materials realized in the device according to the invention comprises:
- a matrix of epoxidized linseed oil and algae oil;
- a stiffening comprising flax fibres, fibres deriving from the spiders' web silk, algae and cellulose.

It is clear that for the production of such a material is needed to farm flax and algae and to breed spiders.

To such aim, the device according to the present invention comprises a tank (10) for fish farming (102). The tank (10) is full of water, and comprises means (105) for water and/or nutrients inlet and outlet, shown schematically in figure 1, and means (101) for water recirculation, provided with a pump (104) and configured to withdraw water (and organic residues produced by the fish metabolic activity) from the bottom of the tank (10) and to make it recirculate by making it fall again in the tank by means of one or more dispensers (106) positioned on the panel (20) described in the following.

Algae (103) are farmed in the tank.

The device is characterized in that it comprises further a growing bed (20) optimized for flax plants farming and spiders breeding.

The growing bed (20) according to the invention comprises a plate or panel (20) provided with a plurality of holes (22) arranged at regular distance (d) between each other. Each hole is configured to house a flax plant (30).

The panel (20) comprises further preferably a plurality of further holes (not shown in figure) in order not to make the recirculation water stagnate. Said further holes are preferably smaller than the holes (22) configured to house the flax plants. While carrying out experiments for the realization of the present invention it was observed that the distance between two adjacent holes has an important role in determining the quantity of spiders' web which can be collected.

In fact, too near plants cause the production of very small webs, while too far plants make difficult for the spiders to produce their webs.

So, said holes (22) are positioned preferably at a respective distance between 12 and 18 cm, and more preferably at a respective distance of 15 cm.

So, the flax plants (30) are housed in respective holes (22), with their roots projecting downwards, and are positioned in an expanded clay layer (50) positioned under the holed panel (20) and on the area of fish farming.

The water and organic residues recirculated by means of the pump (104) will flow across the holed panel (20) and the expanded clay layer (50), before going back in the fish farming tank.

During this flow, the roots of the flax plants, by nourishing the plant, eliminate the excess of organic residues from the water, thus allowing to keep the balance between fish and algae farming and flax plants farming.

The plate (20) according to the invention is also characterized in that it comprises a plurality of stems (21), each one provided with a head (211) with greater section than the stalk of the stem (preferably but not limitingly spherical), arranged next to each other and facing towards the upper portion of the plate.

Said stems (21) are configured so that the space between two spherical heads (211) allows the passage only of small insects (apt to be food for young spiders) and does not allow instead the passage of great insects, which are potential predators of young spiders. So, under the heads, it is created a suitable environment for young spiders to grow.

The stems (21) are preferably about 10 mm long, are distanced about 5 mm between each other and the free space between the heads (211) is about 2 mm. On the stems (21), in the growing area of flax plants (30), the adult spiders can deposit their webs (40).

In comparison to what known at the state of the art, the device is optimized since it comprises a protected area, specifically dedicated to young spiders, and housings for plants farming positioned at a distance optimizing the production of spiders' webs.

The just described device can be used in greenhouses provided with a plurality of devices of the just described type. In fact, a plurality of devices of the described type can be arranged preferably in various overlapping layers, supported by suitable shelves, and moved by means of mechanized systems during picking operations.

The method of usage of the device provides the flax plants and spiders' webs picking, paying attention to keep spiders alive (which will renew their webs), and the algae picking from the farming tanks.

In order to obtain the material, after picking, the next steps are:
- flax plants defibration for transformation in flax fibre (processing which can be carried out by a technology known per se);
- flax oil extraction by squeezing linseeds, which is then epoxidized (also this processing is known per se at the state of the art);
- transformation of the spiders' silk (web) in spiders' silk fibre, with technology known per se;
- algae oil extraction and transformation of the same in fibrous product.

The various fibres produced and the elements of the matrix (algae oil and epoxidized flax oil) can be then injected and mixed in a container under controlled temperature, so that the polymeric link process can start.

The thus realized compound is brought to an extruder extruding it, thus creating bio-composite sheets. While going out from the extruder, the sheets pass on a belt where they are brought gradually to ambient temperature in a time interval needed to allow the chemical links hardening and consolidation.

Alternately, the extruder can extrude a filament shape which then is gradually brought to ambient temperature, and wound in a coil for next usage, as for example in 3D printing systems.

It is clear that other materials realization technologies can be used without departing from the aims of the invention, what described is useful to highlight the fact that the device and method according to the invention allow to produce all the elements needed for the production of a composite material in an ecological and sustainable way.

## Claims

1. Combined device (1) for spiders breeding, flax plants farming, fish farming and algae farming, comprising a tank (10) for fish farming (102) and algae farming (103),
**characterized in that**
it comprises further a growing bed optimized for flax plants farming and spiders breeding, comprising a panel (20) positioned on said tank (10) and provided with a plurality of holes (22), each hole (20) being configured to house a flax plant (30),
and **in that**
said panel comprises also a plurality of stems (21), each provided with a stalk (212) and a head (211) with greater section than the stalk (212), said stems (21) being arranged next to each other, and facing towards the upper portion of said panel (20) .

2. Device according to claim 1, **characterized in that** said holes (22) are arranged at regular distance (d) between each other.

3. Device according to claim 1 or 2, **characterized in that** said panel (20) comprises further a plurality of holes smaller than the holes (22) configured to house the flax plants.

4. Device according to any one of the preceding claims, **characterized in that** said holes (22) are positioned preferably at a respective distance between 12 and 18 cm, and more preferably at a respective distance of 15 cm.

5. Device according to any one of the preceding claims, **characterized in that** it comprises further an expanded clay layer (50) positioned under the holed panel (20) and on the area of fish farming.

6. Device according to claim 1, **characterized in that** said stems (21) are configured so that the space between two spherical heads (211) allows the passage only of small insects and does not allow instead the passage of great insects, which are potential predators of young spiders.

7. Device according to claim 5, **characterized in that** said stems (21) are about 10 mm long, are distanced about 5 mm between each other and the free space between the heads (211) is about 2 mm.

8. Device according to any one of the preceding claims, comprising further means (105) for water and/or nutrients inlet and outlet from said tank, and means (101) for water recirculation, provided with a pump (104) and configured to withdraw water and organic residues produced by the fish metabolic activity from the bottom of the tank (10) and to make it recirculate by making it fall again in the tank by means of one or more dispensers (106) positioned on said panel (20).

9. Composite material comprising a matrix derived from vegetal oils and a stiffening comprising both vegetal and animal origin fibres deriving from the farming and breeding obtained in the device according to any one of the preceding claims.
